Europäisches Patentamt

European Patent Office

Office européen des brevets

Veröffentlichungsnummer: **0 283 697**
A1

# EUROPÄISCHE PATENTANMELDUNG

21 Anmeldenummer: 88101918.6

51 Int. Cl.⁴: **B65G 65/28**

22 Anmeldetag: **10.02.88**

30 Priorität: **13.03.87 DE 3708219**

43 Veröffentlichungstag der Anmeldung:
**28.09.88 Patentblatt 88/39**

84 Benannte Vertragsstaaten:
**DE ES FR GB IT**

71 Anmelder: **Krupp Polysius AG**
**Graf-Galen-Strasse 17**
**D-4720 Beckum(DE)**

72 Erfinder: **Westphal, Horst-Dieter**
**Hubertusstrasse 49**
**D-4720 Beckum-Neubeckum(DE)**

74 Vertreter: **Tetzner, Volkmar, Dr.-Ing. Dr. jur.**
**Van-Gogh-Strasse 3**
**D-8000 München 71(DE)**

54 Vorrichtung zum Ein- und Ausstapeln von Schüttgut in Schüttguthalden.

57 Die Erfindung betrifft eine Vorrichtung zum Ein-
und Ausstapeln von Schüttgut in langgestreckten
Schüttguthalden (1), wobei das auszustapelnde
Schüttgut auf das Untertrum (4b) und das einzustapelnde Schüttgut auf das Obertrum (4a) des in
längsrichtung der Hulde verlaufenden Förderbandes
(4) zugeführt wird und zur Überführung des auszustapelndem Schüttgutes von der Ausstapel-
Fördereinrichtung (3) auf das genannte Untertrum
(4b) des Förderbandes (4) ein kurzer Zwischenförderer (13) vorgesehen ist. Eine derartige
Vorrichtung zeichnet sich vor allem durch verringerten konstruktiven Aufwand und verkleinerten Platzbedarf aus.

EP 0 283 697 A1

*FIG. 1*

## Vorrichtung zum Ein-und Ausstapeln von Schüttgut in Schüttguthalden

Die Erfindung betrifft eine Vorrichtung (entsprechend dem Oberbegriff des Anspruches 1) zum Ein-und Ausstapeln von Schüttgut in langgestreckten Schüttguthalden von Mischbett-und Lagerplatzanlagen.

Bei den bisher bekannten Vorrichtungen der im Oberbegriff des Anspruches 1 vorausgesetzten Art enthält die Einrichtung zum Einstapeln des Schüttgutes (sog. Stacker) ein in Längsrichtung der Halde verlaufendes, das einzustapelnde Schüttgut zuführendes Förderband. Die Einrichtung zum Ausstapeln des Schüttgutes (sog. Reclaimer) enthält gleichfalls ein in Längsrichtung der Halde verlaufendes, das auszustapelnde Schüttgut abführendes Förderband.

Der Erfindung liegt die Aufgabe zugrunde, eine Vorrichtung der im Oberbegriff des Anspruches 1 vorausgesetzten Art so auszubilden, daß der konstruktive Aufwand sowie die Montage-und Wartungsarbeiten wesentlich verringert werden und zugleich der Raumbedarf der ganzen Anlage verkleinert wird.

Diese Aufgabe wird erfindungsgemäß durch die kennzeichnenden Merkmale des Anspruches 1 gelöst.

Zweckmäßige Ausgestaltungen der Erfindung sind Ge genstand der Unteransprüche.

Erfindungsgemäß wird das Untertrum des im Obertrum mit einzustapelndem Schüttgut beschickten Förderbandes zugleich als das mit auszustapelndem Schüttgut beschickte Förderband verwendet. Durch diese doppelte Ausnutzung des nunmehr sowohl für den Einstapelvorgang als auch für den Ausstapelvorgang benutzten Förderbandes ergibt sich eine erhebliche Vereinfachung der Anlage sowie eine beträchtliche Platzersparnis und eine Verringerung der Montage-und Wartungsarbeiten. Durch die Verringerung der Entfernung zwischen dem Haldenfuß und der Mitte des im Obertrum mit einzustapelndem Schüttgut beschickten Förderbandes wird die erforderliche Lagerplatzgröße merklich verkleinert. Damit verringert sich zugleich auch der Achsabstand des Bandabsetzers, was den Stahlbau in der Einrichtung zum Einstapeln (Stacker) vereinfacht. Der Wegfall des bisher erforderlichen gesonderten Ausstapelbandes bringt eine deutliche Verkleinerung des Maschinengewichtes, der erforderlichen Elektroausrüstung sowie der Montage-und Wartungsarbeiten mit sich. Weiterhin können sonst oft erforderliche Abknickungen in der Ausstapel-Fördereinrichtung (Reclaimer-Kratzerkette) in Fortfall kommen, was eine kürzere Kettenlänge und weniger Stahlbau am Reclaimer ermöglicht.

Erfindungsgemäß ist zwischen der Ausstapel-Fördereinrichtung und dem mit auszustapelndem Schüttgut beschickten Förderband ein in Verlängerung der Ausstapel-Fördereinrichtung angeordneter und mit der Ausstapel-Fördereinrichtung in Längsrichtung der Halde verfahrbarer kurzer Zwischenförderer vorgesehen, der aus dem Bewegungsbereich der Einstapeleinrichtung entfernbar ist, wenn sich Ein-und Ausstapeleinrichtung im Betrieb begegnen.

Die Erfindung ist in der Zeichnung beispielsweise veranschaulicht. Es zeigen

Fig. 1 eine Schemadarstellung der erfindungsgemäßen Vorrichtung (gesehen in Richtung auf die Stirnseite der Schüttguthalde),

Fig. 2 das in Fig. 1 mit x bezeichnete Detail in vergrößertem Maßstab,

Fig. 3 und 4 schematische Aufsichten auf den Zwischenförderer im Betriebszustand und in der eingeschwenkten Position,

Fig. 5 eine Schemadarstellung des zum Ein-und Ausstapeln verwendeten Förderbandes (gesehen in Richtung auf die Längsseite der Schüttguthalde),

Fig. 6 eine Aufsicht auf das in Fig. 5 mit y bezeichnete Detail,

Fig. 7 einen Schnitt längs der Linie VII-VII der Fig. 6,

Fig. 8 eine Schemadarstellung (entsprechend Fig. 5) einer weiteren Ausführung des Förderbandes,

Fig. 9 eine Stirnansicht (entsprechend Fig. 2) auf ein weiteres Ausführungsbeispiel.

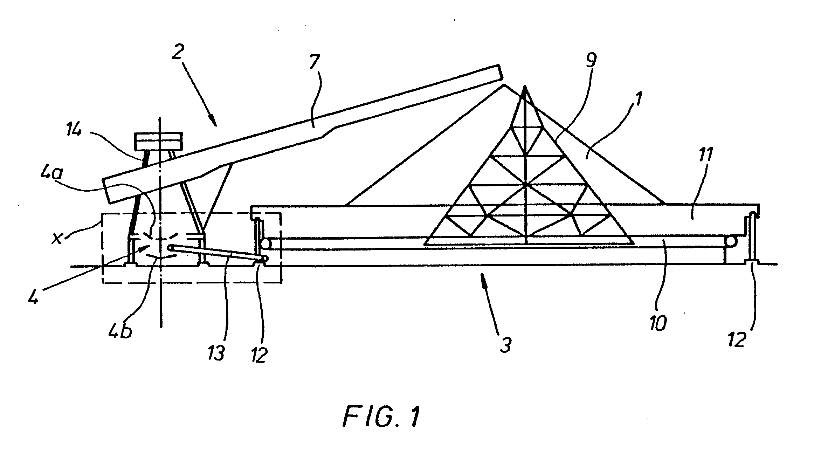

Die in Fig. 1 schematisch dargestellte Vorrichtung zum Ein-und Ausstapeln von Schüttgut in einer langgestreckten Schüttguthalde 1 einer Mischbett-oder Lagerplatzanlage enthält eine Einrichtung 2 zum Einstapeln des Schüttgutes (sog. Stacker) und eine Einrichtung 3 zum Ausstapeln des Schüttgutes (sog. Reclaimer).

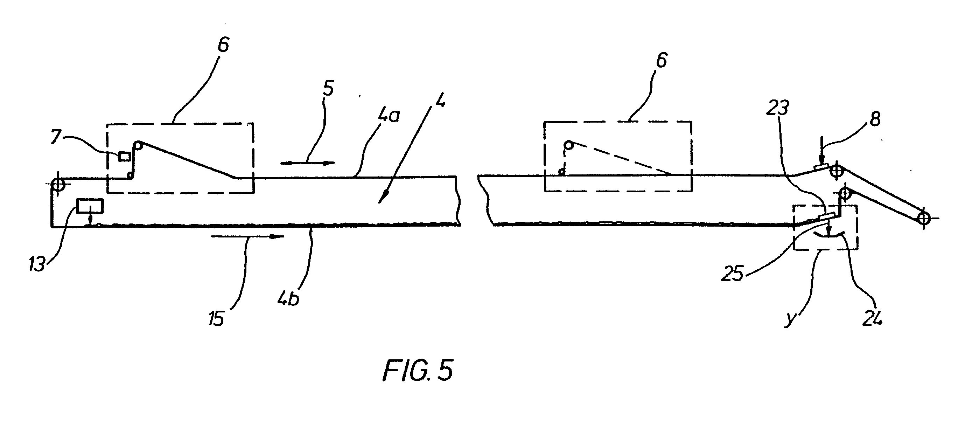

Zu der Einrichtung 2 zum Einstapeln des Schüttgutes gehört ein neben dem längsseitigen Haldenfuß angeordnetes, in Längsrichtung der Halde verlaufendes Förderband 4, in dessen Obertrum 4a ein in Längsrichtung der Halde (d. h. in Richtung des Pfeiles 5, Fig. 5) verfahrbarer Schleifenwagen 6 ausgebildet ist. Fig. 5 zeigt den Schleifenwagen 6 in zwei unterschiedlichen Positionen.

Zur Einrichtung 2 zum Einstapeln des Schüttgutes gehört weiterhin ein in Querrichtung der Schüttguthalde angeordneter, etwa bis zum Haldenfirst reichender Bandabsetzer 7.

Das einzustapelnde Schüttgut wird bei 8 (Fig. 5) auf das gemuldete Obertrum 4a des Förderbandes 4 aufgegeben, zum Schleifenwagen 6 transportiert, vom Schleifenwagen 6 dem Bandabsetzer 7 zugeführt und von diesem auf die Schüttguthalde 1 abgeworfen.

Der bisher beschriebene Aufbau der Einrichtung 2 zum Einstapeln des Schüttgutes ist ebenso wie ihre Funktion bekannt.

Die Einrichtung 3 zum Ausstapeln des Schüttgutes enthält einen die Stirnseite der Halde bestreichenden Rechen 9 sowie eine am stirnseitigen Haldenfuß parallel zu diesem angeordnete Ausstapel-Fördereinrichtung 10, die zusammen mit dem Rechen 9 von einem Träger 11 getragen wird, der auf Schienen 12 in Längsrichtung der Schüttguthalde 1 verfahrbar ist.

Weiterhin gehört zur Einrichtung 3 zum Ausstapeln des Schüttgutes ein kurzer Zwischenförderer 13, der in Verlängerung der Ausstapel-Fördereinrichtung 10 zwischen dieser und dem Untertrum 4b des Förderbandes 4 angeordnet ist. Dieser Zwischenförderer 13 wird gleichfalls vom Träger 11 getragen und ist zusammen mit der Ausstapel-Fördereinrichtung 10 in Längsrichtung der Schüttguthalde 1 verfahrbar. Er kann dabei aus dem Bewegungsbereich des Trägers 14 der Einstapeleinrichtung 2 herausgeschwenkt werden, wenn sich die Einstapeleinrichtung 2 und die Ausstapeleinrichtung 3 im Betrieb begegnen.

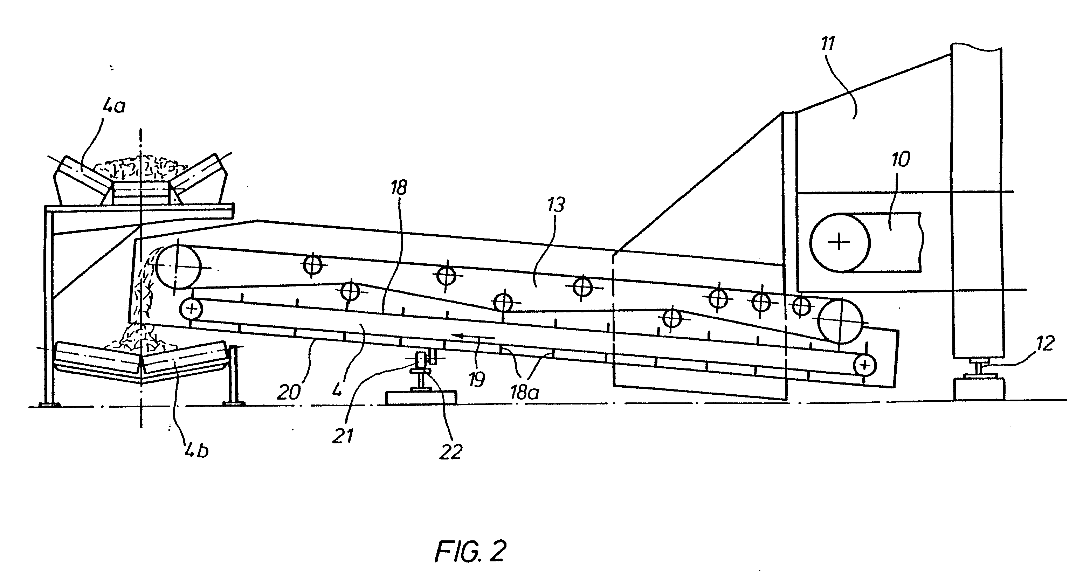

Die Fig. 2 bis 7 zeigen einige für das Verständnis der Erfindung wesentliche Einzelheiten.

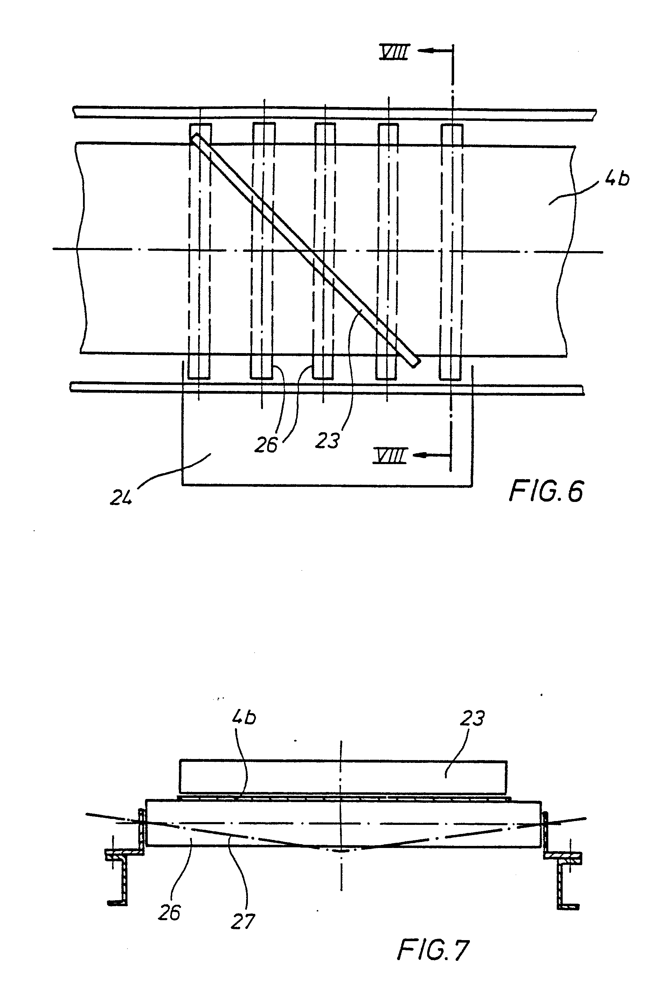

Das durch die Ausstapel-Fördereinrichtung 10 von der Stirnseite der Schüttguthalde 1 entnommene Schüttgut wird über den Zwischenförderer 13 auf das ebenfalls gemuldete Untertrum 4b des Förderbandes 4 aufgegeben. Es wird durch das in Richtung des Pfeiles 15 laufende Untertrum 4b des Förderbandes 4 einer Abwurfstelle zugeführt, die in Fig. 5 mit y bezeichnet und in den Fig. 6 und 7 näher veranschaulicht ist. Während somit das Obertrum 4a des Förderbandes 4 mit einzustapelndem Schüttgut beschickt wird, dient das Untertrum 4b desselben Förderbandes 4 zur Abführung des auszustapelnden Schüttgutes.

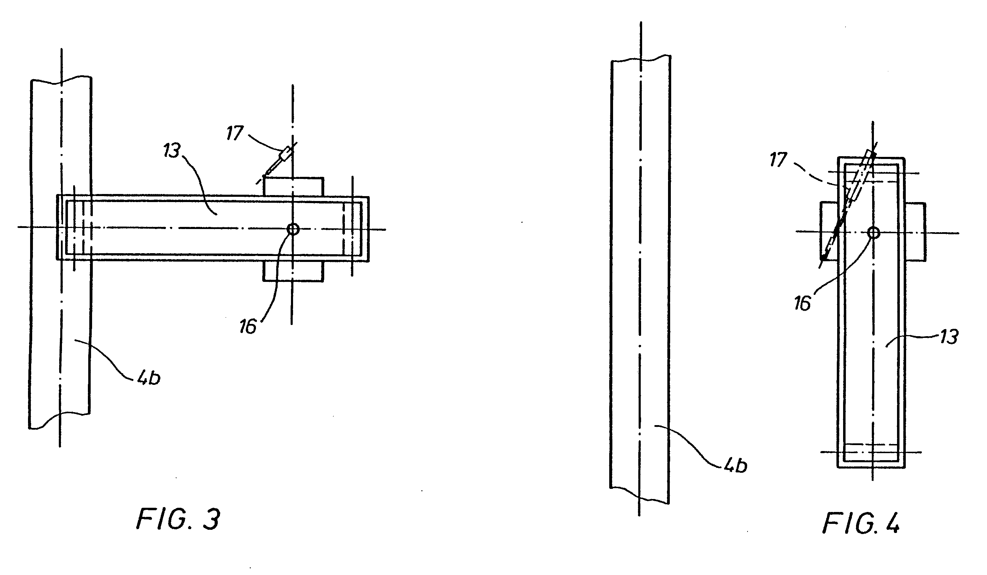

Der Zwischenförderer 13 ist an seinem aufgabeseitigem Ende um eine vertikale Achse 16 mittels einer nur angedeuteten Betätigungseinrichtung 17 schwenkbar. In der einen Stellung (Fig. 3) stellt der Zwischenförderer 13 eine Verbindung zwischen der Ausstapel-Fördereinrichtung 10 und dem Untertrum 4b des Förderbandes 4 her. In der anderen, um 90° verschwenkten Stellung befindet sich der Zwischenförderer 13 außerhalb des Bewegungsbereiches der Einstapeleinrichtung 2, so daß die Einstapeleinrichtung 2 und die Ausstapeleinrichtung 3 (die ja unabhängig voneinander arbeiten) einan der passieren können.

Unter dem Zwischenförderer 13 ist ein mit Kratzern 18a besetztes Kratzerband 18 vorgesehen, das in Richtung des Pfeiles 19 umläuft und vom Zwischenförderer 13 nach unten in das Gehäuse 20 fallendes Schüttgut gleichfalls dem Untertrum 4b des Förderbandes 4 zuführt (vgl. Fig. 2).

Der Zwischenförderer 13 stützt sich über wenigstens eine Laufrolle 21 auf einer in Längsrichtung der Schüttguthalde 1 angeordneten Fahrschiene 22 ab, zweckmäßig auf einer zugleich auch für die Einstapeleinrichtung 2 verwendeten Fahrschiene.

Bei dem in den Fig. 5, 6 und 7 dargestellten Ausführungsbeispiel ist am abgabeseitigen Ende des mit auszustapelndem Schüttgut beschickten Untertrums 4b des Förderbandes 4 ein Abstreifer 23 vorgesehen, durch den das Gut vom Untertrum 4b des Förderbandes 4 auf ein weiterförderndes Band 24 abgeworfen wird (Pfeil 25). Im Bereich des Abstreifers 23 ist das Untertrum 4b des Förderbandes 4 durch gerade Rollen 26 aus der Muldung (die das Untertrum 4b des Förderbandes 4 im übrigen besitzt, vgl. Fig. 2) herausgehoben. Die Muldung des Untertrums 4b des Förderbandes 4 ist in Fig. 7 durch die strichpunktierte Linie 27 angedeutet.

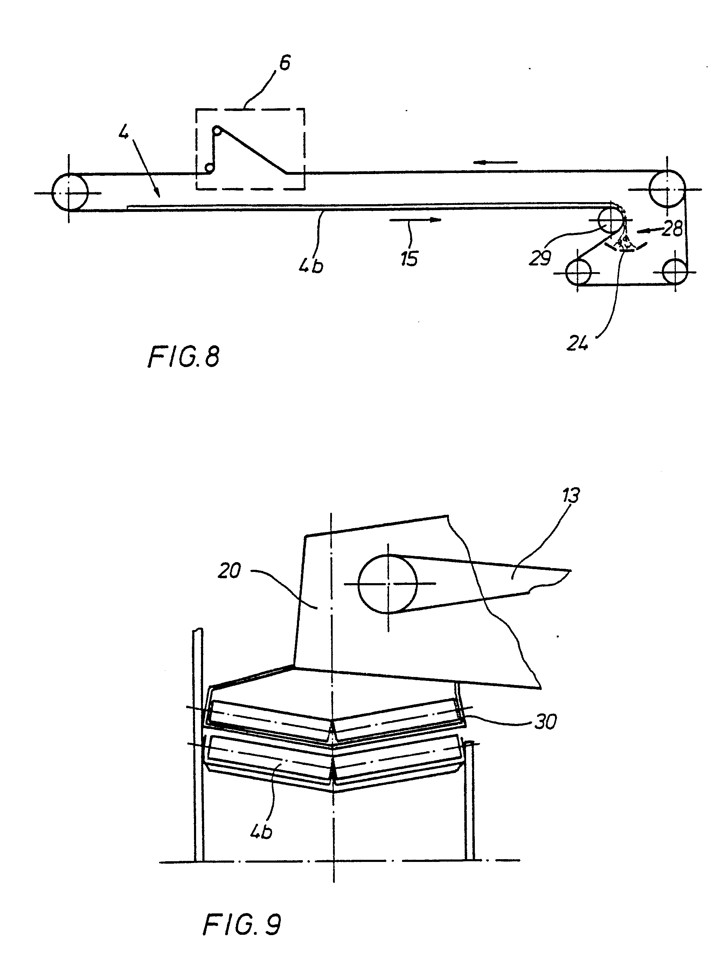

Bei der in Fig. 8 dargestellten Variante ist das abgabeseitige Ende des mit auszustapelndem Schütt gut beschickten Untertrums 4b des Förderbandes 4 mit einer Schüttgut-Abwurfstelle 28 versehen, die als Bandumlenkung ausgebildet ist. Über die erste Rolle 29 dieser Bandumlenkung 28 wird das auszustapelnde Schüttgut auf das weiterfördernde Band 24 abgeworfen.

Fig. 9 zeigt eine Variante, bei der am abgabeseitigen Ende des Zwischenförderers 13 dicht oberhalb des Untertrums 4b des Förderbandes 4 ein Aufgabetisch 30 vorgesehen ist, der vom Gehäuse 20 des Zwischenförderers 13 getragen wird und zusammen mit dem Zwischenförderer 13 aus dem Bewegungsbereich der Einstapeleinrichtung 2 herausgeschwenkt werden kann. Das vom Zwischenförderer 13 abgeworfene Schüttgut fällt zunächst auf den Aufgabetisch 30 und wird dann von diesem sanft auf das Untertrum 4b des Förderbandes 4 abgelegt. Der Aufgabetisch 30 ist zu diesem Zweck ähnlich wie das Untertrum 4b des Förderbandes 4 gemuldet. Auf diese Weise wird die Belastung des Untertrums 4b des Förderbandes 4 durch das vom Zwischenförderer 3 abgeworfene Schüttgut gering gehalten und es wird nur eine kleine Anzahl von Unterbandrollen benötigt.

**Ansprüche**

1. Vorrichtung zum Ein-und Ausstapeln von Schüttgut in langgestreckten Schüttguthalden von Mischbett-und Lagerplatzanlagen, enthaltend

a) eine Einrichtung (2) zum Einstapeln des Schüttgutes mit

a₁) einem neben dem längsseitigen Haldenfuß angeordneten, in Längsrichtung der Halde verlaufenden Förderband (4),

a₂) einem im Obertrum (4a) des Förderbandes (4) ausgebildeten, in Längsrichtung der Halde (1) verfahrbaren Schleifenwagen (6),

a₃) sowie einem in Querrichtung der Halde (1) angeordneten, über den Schleifenwagen (6) mit einzustapelndem Schüttgut beschickten Bandabsetzer (7),

b) sowie eine Einrichtung (3) zum Ausstapeln des Schüttgutes mit

b₁) einer am stirnseitigen Haldenfuß parallel zu diesem angeordneten und insgesamt in Längsrichtung der Halde (1) verfahrbaren Ausstapel-Fördereinrichtung (10),

b₂) und einem neben dem längsseitigen Haldenfuß angeordneten, in Längsrichtung der Halde (1) verlaufenden und durch die Ausstapel-Fördereinrichtung (10) mit auszustapelndem Schüttgut beschickten Förderband (4),

gekennzeichnet durch folgende Merkmale:

c) das mit auszustapelndem Schüttgut beschickte Förderband (4) wird durch das Untertrum (4b) des im Obertrum (4a) mit einzustapelndem Schüttgut beschickten Förderbandes (4) gebildet;

d) zwischen der Ausstapel-Fördereinrichtung (10) und dem mit auszustapelndem Schüttgut beschickten Förderband (4) ist ein in Verlängerung der Ausstapel-Fördereinrichtung (10) angeordneter und mit der Ausstapel-Fördereinrichtung in Längsrichtung der Halde (1) verfahrbarer, kurzer Zwischenförderer (13) vorgesehen, der aus dem Bewegungsbereich der Einstapeleinrichtung (2) entfernbar ist.

2. Vorrichtung nach Anspruch 1, dadurch gekennzeichnet, daß der Zwischenförderer (13) an seinem aufgabeseitigen Ende um eine vertikale Achse (16) schwenkbar ist.

3. Vorrichtung nach Anspruch 1, dadurch gekenn zeichnet, daß unter dem Untertrum des Zwischenförderers (13) ein Kratzerband (18) vorgesehen ist.

4. Vorrichtung nach Anspruch 1, dadurch gekennzeichnet, daß der Zwischenförderer (13) über eine Laufrolle (21) auf einer in Längsrichtung der Halde (1) angeordneten Fahrschiene (22), vorzugsweise auf einer Fahrschiene der Einstapeleinrichtung (2), abgestützt ist.

5. Vorrichtung nach Anspruch 1, dadurch gekennzeichnet, daß am abgabeseitigen Ende des Zwischenförderers (13) ein zusammen mit dem Zwischenförderer aus dem Bewegungsbereich der Einstapeleinrichtung (2) entfernbarer Aufgabetisch (30) vorgesehen ist.

6. Vorrichtung nach Anspruch 1, bei der das mit einzustapelndem Schüttgut beschickte Obertrum (4a) des Förderbandes (4) gemuldet ist, dadurch gekennzeichnet, daß auch das mit auszustapelndem Schüttgut beschickte Untertrum (4b) des Förderbandes (4) gemuldet ist.

7. Vorrichtung nach Anspruch 6, dadurch gekennzeichnet, daß am abgabeseitigen Ende das mit auszustapelndem Schüttgut beschickten Untertrums (4b) des Förderbandes (4) ein Abstreifer (23) vorgesehen ist, in dessen Bereich das Untertrum (4b) durch gerade Rollen (26) aus der Muldung herausgehoben ist.

8. Vorrichtung nach Anspruch 1, dadurch gekennzeichnet, daß das abgabeseitige Ende des mit auszustapelndem Schüttgut beschickten Untertrums (4b) des Förderbandes (4) als Bandumlenkung mit einer Schüttgut-Abwurfstelle (28) ausgebildet ist.

FIG. 1

0 283 697

FIG. 2

FIG. 3

FIG. 4

0 283 697

FIG. 5

FIG.6

FIG.7

FIG.8

FIG.9

## EINSCHLÄGIGE DOKUMENTE

EP 88101918.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - A1 - 3 519 208 (GUSTAV SCHADE MASCHINENFABRIK)<br>* Gesamt; insbesondere Fig. 4 *<br>-- | 1 | B 65 G 65/28 |
| A | DE - A1 - 2 446 514 (GUSTAV SCHADE MASCHINENFABRIK)<br>* Seiten 26,27; Fig. 12 *<br>-- | 1 | |
| A | GB - A - 1 406 596 (BARRE)<br>* Gesamt; insbesondere Fig. 9A, 9B *<br>---- | 1 | |

RECHERCHIERTE SACHGEBIETE (Int. Cl.4)

B 65 G

Der vorliegende Recherchenbericht wurde für alle Patentansprüche erstellt.

| Recherchenort | Abschlußdatum der Recherche | Prüfer |
|---|---|---|
| WIEN | 21-06-1988 | PISSENBERGER |